# EUROPEAN PATENT APPLICATION

(11) **EP 4 223 554 A1**
(43) Date of publication of application: **09.08.2023**
(21) Application number: 21875856.3
(22) Date of filing: 01.10.2021
(51) Int. Cl.: B60C 1/00, C08K 5/098, C08K 5/44, C08K 5/521, C08L 7/00, C08L 9/00, C08L 21/00, C08K 3/04, B60C 9/00

(54) **RUBBER COMPOSITION, RUBBER COMPOSITION FOR TIRES, VULCANIZED RUBBER, RUBBER-METAL COMPOSITE, TIRE, INDUSTRIAL BELT, CRAWLER, AND HOSE**

(30) Priority: 01.10.2020 JP 2020167049
(71) Applicant: BRIDGESTONE CORPORATION, Chuo-ku Tokyo 104-8340 (JP)
(72) Inventor: SAIKI, Aya, Tokyo 104-8340 (JP); MUSHA, Shinichi, Tokyo 104-8340 (JP)
(74) Representative: Marks & Clerk LLP
(86) International application number: PCT/JP2021/036372
(87) International publication number: WO 2022/071560

(57) **Abstract**

A rubber composition contains a rubber component, an organic phosphoric acid compound having at least one alkyl chain, a vulcanizing agent, and a vulcanization accelerator. A content of a cobalt-containing compound is 0.00 parts by mass or more and less than 0.01 parts by mass as converted to a cobalt amount per 100 parts by mass of the rubber component. A content of N,N-dicyclohexyl-2-benzothiazolylsulfenamide is 0.00 parts by mass or more and less than 0.08 parts by mass per 100 parts by mass of the rubber component. The rubber composition can be used to produce a rubber-metal composite excellent in heat-resistant adhesion between a vulcanized rubber and a metal.

## Description

### Technical Field

The present invention relates to a rubber composition, a rubber composition for a tire, a vulcanized rubber, a rubber-metal composite, a tire, an industrial belt, a crawler, and a hose.

### Background Art

In order to adhere a rubber and a metal to each other, various contrivances and inventions have been made so far.

For example, in order to provide a radial tire in which initial adhesion and heat-resistant adhesion between a metal cord and a coating rubber are improved while maintaining a breakdown property, a heat aging resistance property, and a fatigue fracture property of the coating rubber, a rubber composition prepared by mixing 0.1 to 3.0 parts by mass of N,N'-diphenylmethane bismaleimide and 0.1 to 3.0 parts by mass of sodium pyrophosphate decahydrate per 100 parts by mass of a rubber component formed of a diene-based rubber is known to be used in the coating rubber with which the metal cord is coated for at least one of a belt layer and a carcass ply in which the metal cord is coated with the coating rubber (see, for example, PTL 1).

In addition, for example, in order to obtain a rubber-metal composite having excellent initial adhesion and heat-resistant adhesion between a metal material and a rubber composition, it is disclosed that a cobalt compound is contained in the rubber composition in an amount of 0.0025 to 0.05 parts by mass as converted to cobalt per 100 parts by mass of the rubber component (see, for example, PTL 2).

### Citation List

### Patent Literature

PTL 1: JP 2005-220188 A
PTL 2: WO 2013/140820

### Summary of Invention

### Technical Problem

In a coating rubber containing a large amount of organic acid cobalt salt, cobalt accelerates thermal deterioration of the coating rubber, and thus a bismaleimide and a sodium compound are used in PTL 1. In PTL 2, in order to provide a tire with which an environmental load is further reduced, adhesion between a vulcanized rubber and the metal material is attempted to be achieved by reducing a usage amount of a cobalt-containing compound.

However, in the rubber compositions disclosed in PTLs 1 and 2, there is room for study on the heat-resistant adhesion between the vulcanized rubber and the metal.

In view of the above circumstances, an object of the present invention is to provide a rubber-metal composite excellent in heat-resistant adhesion between a vulcanized rubber and a metal, a rubber composition and a rubber composition for a tire from which the rubber-metal composite can be produced, a vulcanized rubber containing the rubber composition, and a tire, an industrial belt, a crawler, and a hose that contain the rubber-metal composite, and to achieve the object.

### Solution to Problem

<1> A rubber composition containing: a rubber component; an organic phosphoric acid compound having at least one alkyl chain; a vulcanizing agent; and a vulcanization accelerator, in which a content of a cobalt-containing compound is 0.00 parts by mass or more and less than 0.01 parts by mass as converted to a cobalt amount per 100 parts by mass of the rubber component, and a content of N,N-dicyclohexyl-2-benzothiazolylsulfenamide is 0.00 parts by mass or more and less than 0.08 parts by mass per 100 parts by mass of the rubber component.
<2> The rubber composition according to <1>, in which the alkyl chain has 1 to 20 carbon atoms.
<3> The rubber composition according to <1> or <2>, in which the alkyl chain has 15 to 20 carbon atoms.
<4> The rubber composition according to any one of <1> to <3>, in which a content of the organic phosphoric acid compound is 0.05 to 10 parts by mass per 100 parts by mass of the rubber component.
<5> The rubber composition according to any one of <1> to <4>, in which the rubber component contains a rubber having an isoprene structure.
<6> The rubber composition according to <5>, in which the rubber having an isoprene structure contains at least one selected from the group consisting of a synthetic isoprene rubber and a natural rubber.
<7> The rubber composition according to <5> or <6>, in which the rubber component contains 50% to 100% by mass of the rubber having an isoprene structure.
<8> The rubber composition according to any one of <1> to <7>, further containing: a filler containing at least one type of carbon black.
<9> The rubber composition according to <8>, in which a content of the carbon black is 1 to 80 parts by mass per 100 parts by mass of the rubber component.
<10> A rubber composition for a tire containing: the rubber composition according to any one of <1> to <9>.
<11> A vulcanized rubber containing: the rubber composition according to any one of <1> to <9>.
<12> A rubber-metal composite containing: the vulcanized rubber according to <11>; and a metal.
<13> A tire containing: the rubber-metal composite according to <12>.
<14> An industrial belt containing: the rubber-metal composite according to <12>.
<15> A crawler containing: the rubber-metal composite according to <12>.
<16> A hose containing: the rubber-metal composite according to <12>.

### Advantageous Effects of Invention

According to the present invention, it is possible to provide a rubber-metal composite excellent in heat-resistant adhesion between a vulcanized rubber and a metal, a rubber composition and a rubber composition for a tire from which the rubber-metal composite can be produced, a vulcanized rubber containing the rubber composition, and a tire, an industrial belt, a crawler, and a hose that contain the rubber-metal composite.

### Description of Embodiments

Hereinafter, the present invention will be described in detail based on embodiments. In the following description, a description of "A to B" indicating a numerical range represents a numerical range including A and B which are end points and represents "A or more and B or less" (when A < B) or "A or less and B or more" (when A > B).

In addition, part by mass and % by mass are synonymous with part by weight and % by weight, respectively.

### <Rubber Composition>

A rubber composition according to the present invention contains a rubber component, an organic phosphoric acid compound having at least one alkyl chain, a vulcanizing agent, and a vulcanization accelerator containing 0.08 to 2 parts by mass of a sulfenamide-based vulcanization accelerator per 100 parts by mass of the rubber component. A content of a cobalt-containing compound is 0.00 parts by mass or more and less than 0.01 parts by mass as converted to a cobalt amount per 100 parts by mass of the rubber component.

The rubber composition may further contain a filler or the like.

As described in PTL 1, when the rubber composition contains a large amount of the cobalt-containing compound, thermal deterioration of a coating rubber may be accelerated. On the other hand, since the cobalt-containing compound has a function of promoting adhesion between a vulcanized rubber and a metal by being contained in the rubber composition, it is difficult to improve the adhesion between the metal and the vulcanized rubber without adding the cobalt-containing compound to the rubber composition. In addition, as shown in PTL 2, in order to provide a tire with which an environmental load is further reduced, a reduction in a usage amount of the cobalt-containing compound is also considered. However, when the usage amount of the cobalt-containing compound is small, it is considered that an adhesive force between the vulcanized rubber and the metal is easily prevented.

In contrast, it is found that, when the rubber composition contains the organic phosphoric acid compound having at least one alkyl chain, heat-resistant adhesion between the vulcanized rubber and the metal is excellent even when the cobalt-containing compound is not substantially contained and, further, even when N,N-dicyclohexyl-2-benzothiazolylsulfenamide is not substantially contained. Although a reason therefor is not clear, it is presumed that, instead of sodium pyrophosphate which is an inorganic phosphoric acid compound used in PTL 1, in the present invention, the organic phosphoric acid compound having at least one alkyl chain is used, whereby the organic phosphoric acid compound is easily dispersed in the rubber component and a rubber-metal composite exhibits excellent heat-resistant adhesion. In addition, it is presumed that, when the cobalt-containing compound is not substantially contained, thermal deterioration of the vulcanized rubber is prevented, and stronger heat-resistant adhesion is obtained. Further, it is considered that an environmental burden can be further reduced by substantially not containing the cobalt-containing compound and N,N-dicyclohexyl-2-benzothiazolylsulfenamide.

Hereinafter, the rubber composition according to the present invention will be described in detail.

### [Rubber Component]

The rubber composition according to the present invention contains the rubber component.

Examples of the rubber component include at least one diene-based rubber selected from the group consisting of a natural rubber (NR) and a synthetic diene-based rubber. The rubber component may be modified.

Specifically, examples of the synthetic diene-based rubber include a polyisoprene rubber (IR), a polybutadiene rubber (BR), a styrene-butadiene copolymer rubber (SBR), a butadiene-isoprene copolymer rubber (BIR), a styreneisoprene copolymer rubber (SIR), a styrene-butadiene-isoprene copolymer rubber (SBIR), and modified rubbers thereof.

From a viewpoint of the adhesion between the metal and the vulcanized rubber, the rubber component is preferably a natural rubber, a polyisoprene rubber, a styrene-butadiene copolymer rubber, a polybutadiene rubber, an isobutylene isoprene rubber, or modified rubbers thereof. Further, from a viewpoint of mechanical strength of the vulcanized rubber, the rubber component preferably contains a rubber having an isoprene structure, and the rubber having an isoprene structure more preferably contains one or more selected from the group consisting of a synthetic isoprene rubber and a natural rubber.

One rubber component may be used alone, or two or more rubber components may be blended for use.

From a viewpoint of improving the adhesion between the metal and the vulcanized rubber and improving durability of an obtained rubber-metal composite, the rubber component preferably contains 50% to 100% by mass of the rubber having an isoprene structure. From the same viewpoint, a content of the rubber having an isoprene structure in the rubber component is more preferably 65% by mass or more, still more preferably 75% by mass or more, and may be 100% by mass.

From viewpoints of improving the adhesion between the metal and the vulcanized rubber and improving durability of the obtained rubber-metal composite, a natural rubber (NR) and a polyisoprene rubber (IR) may be used in combination as the rubber component. In this case, a ratio of the natural rubber to the polyisoprene rubber (mass of natural rubber: mass of polyisoprene rubber) is preferably 55:45 to 95:5, more preferably 65:35 to 93:17, and still more preferably 70:30 to 90:10.

The rubber component may contain a non-diene-based rubber as long as effects of the present invention are not impaired.

### [Organic Phosphoric Acid Compound]

The rubber composition according to the present invention contains the organic phosphoric acid compound having at least one alkyl chain.

When the rubber composition contains the organic phosphoric acid compound described above, the heat-resistant adhesion between the vulcanized rubber and the metal is improved.

The organic phosphoric acid compound may have two or more alkyl chains, and specifically, the organic phosphoric acid compound preferably has 1 to 3 alkyl chains, and more preferably 1 to 2 alkyl chains.

Specifically, the number of carbon atoms in the alkyl chain is preferably 1 to 20. The number of carbon atoms in the alkyl chain is more preferably 10 or more. When the organic phosphoric acid compound has plural alkyl chains, the numbers of carbon atoms in the alkyl chains are independent and may be the same as or different from each other. From a viewpoint of further improving dispersibility of the organic phosphoric acid compound in the rubber component, the number of carbon atoms in the alkyl chain is more preferably 15 to 20.

The alkyl chain may be linear, branched, or cyclic, and from a viewpoint of dispersibility in the rubber component, the alkyl chain is preferably linear or branched and more preferably linear. The organic phosphoric acid compound is preferably a non-aromatic organic phosphoric acid compound free of an aromatic group.

The organic phosphoric acid compound is preferably a phosphoric acid ester, and preferably has at least one OH group. It is more preferable that in the phosphoric acid ester, one or two OH groups are bonded to a phosphorus atom. In other words, the organic phosphoric acid compound is more preferably a phosphoric acid ester having 1 or 2 ester groups.

A content of the organic phosphoric acid compound in the rubber composition is preferably 0.05 to 10 parts by mass per 100 parts by mass of the rubber component. When the content of the organic phosphoric acid compound in the rubber composition is 0.05 parts by mass or more per 100 parts by mass of the rubber component, the heat-resistant adhesion between the vulcanized rubber and the metal can be improved, and performance is hard to be changed even when the content exceeds 10 parts by mass.

From viewpoints of the heat-resistant adhesion between the vulcanized rubber and the metal, cost-effectiveness, and the like, the content of the organic phosphoric acid compound in the rubber composition is more preferably 0.1 to 7 parts by mass per 100 parts by mass of the rubber component, and still more preferably 0.5 to 5 parts by mass per 100 parts by mass of the rubber component.

### [Cobalt-containing Compound]

The content of the cobalt-containing compound in the rubber composition according to the present invention is 0.00 parts by mass or more and less than 0.01 parts by mass as converted to a cobalt amount per 100 parts by mass of the rubber component. This means that the rubber composition according to the present invention does not substantially contain the cobalt-containing compound except when the cobalt-containing compound is inevitably contained as impurities.

The cobalt-containing compound may be an inorganic compound or an organic compound. An organic compound is generally used, and more specifically, an organic acid cobalt salt is used.

Examples of the organic acid cobalt salt include cobalt naphthenate, cobalt stearate, cobalt neodecanoate, cobalt rosinate, cobalt versatate, cobalt tall oil acid, cobalt oleate, cobalt linoleate, cobalt linolenate, and cobalt palmitate. Examples of a cobalt metal complex include cobalt acetylacetonate.

From a viewpoint of further reducing the environmental burden, the content of the cobalt-containing compound in the rubber composition is preferably 0.00 parts by mass as converted to a cobalt amount per 100 parts by mass of the rubber component.

For example, when cobalt stearate is used as the cobalt-containing compound, and when the rubber composition contains 1 part by mass of cobalt stearate per 100 parts by mass of the rubber component, the rubber composition contains 0.09 parts by mass of cobalt stearate as converted to a cobalt amount.

### [Vulcanizing Agent]

The rubber composition according to the present invention contains the vulcanizing agent.

The vulcanizing agent is not particularly limited, and examples thereof include powdered sulfur, precipitated sulfur, colloidal sulfur, surface-treated sulfur, and insoluble sulfur.

From viewpoints of further improving the heat-resistant adhesion and further improving durability of a rubber-metal composite, a tire, an industrial belt, and a crawler, a content of the vulcanizing agent in the rubber composition is preferably 2 to 10 parts by mass, more preferably 3 to 9 parts by mass, and still more preferably 4 to 9 parts by mass per 100 parts by mass of the rubber component.

### [Vulcanization Accelerator]

The rubber composition according to the present invention contains the vulcanization accelerator.

However, a content of N,N-dicyclohexyl-2-benzothiazolylsulfenamide is 0.00 parts by mass or more and less than 0.08 parts by mass per 100 parts by mass of the rubber component. This means that the rubber composition according to the present invention does not substantially contain N,N-dicyclohexyl-2-benzothiazolylsulfenamide except when N,N-dicyclohexyl-2-benzothiazolylsulfenamide is inevitably contained as impurities.

N,N-dicyclohexyl-2-benzothiazolylsulfenamide can increase a reaction rate of a vulcanization reaction and improve the adhesion between the vulcanized rubber and the metal, and thus has been used so far. However, the environmental burden can be reduced by not using N,N-dicyclohexyl-2-benzothiazolylsulfenamide. When N,N-dicyclohexyl-2-benzothiazolylsulfenamide is not used, the reaction rate of the vulcanization reaction due to this compound cannot be expected to be improved. However, in the present invention, since the organic phosphoric acid compound having at least one alkyl chain is used, excellent heat-resistant adhesion can be achieved even the vulcanization accelerator is not contained.

Various vulcanization accelerators can be used in the rubber composition as long as the content of N,N-dicyclohexyl-2-benzothiazolylsulfenamide is less than 0.08 parts by mass per 100 parts by mass of the rubber component.

Examples thereof include various vulcanization accelerators such as a sulfenamide-based vulcanization accelerator other than N,N-dicyclohexyl-2-benzothiazolylsulfenamide, a thiuram-based vulcanization accelerator, a guanidine-based vulcanization accelerator, an aldehyde-amine-based vulcanization accelerator, an aldehyde-ammonia vulcanization accelerator, a thiazole-based vulcanization accelerator, a thiourea-based vulcanization accelerator, a dithiocarbamate-based vulcanization accelerator, and a xanthate-based vulcanization accelerator. Only one vulcanization accelerator may be used, or two or more vulcanization accelerators may be used.

Among these, the sulfenamide-based vulcanization accelerator other than N,N-dicyclohexyl-2-benzothiazolylsulfenamide (another sulfenamide-based vulcanization accelerator) is preferably used. When the rubber composition according to the present invention contains another sulfenamide-based vulcanization accelerator, vulcanization of the rubber component can be further accelerated, and the heat-resistant adhesion between the vulcanized rubber and the metal can be improved.

Examples of the another sulfenamide vulcanization accelerator include N-cyclohexyl-2-benzothiazolylsulfenamide, N-tert-butyl-2-benzothiazolylsulfenamide, N-oxydiethylene-2-benzothiazolylsulfenamide, N-methyl-2-benzothiazolylsulfenamide, N-ethyl-2-benzothiazolylsulfenamide, N-propyl-2-benzothiazolylsulfenamide, N-butyl-2-benzothiazolylsulfenamide, N-pentyl-2-benzothiazolylsulfenamide, N-hexyl-2-benzothiazolylsulfenamide, N-heptyl-2-benzothiazolylsulfenamide, N-octyl-2-benzothiazolylsulfenamide, N-2-ethylhexyl-2-benzothiazolylsulfenamide, N-decyl-2-benzothiazolylsulfenamide, N-dodecyl-2-benzothiazolylsulfenamide, N-stearyl-2-benzothiazolylsulfenamide, N,N-dimethyl-2-benzothiazolylsulfenamide, N,N-diethyl-2-benzothiazolylsulfenamide, N,N-dipropyl-2-benzothiazolylsulfenamide, N,N-dibutyl-2-benzothiazolylsulfenamide, N,N-dipentyl-2-benzothiazolylsulfenamide, N,N-dihexyl-2-benzothiazolylsulfenamide, N,N-diheptyl-2-benzothiazolylsulfenamide, N,N-dioctyl-2-benzothiazolylsulfenamide, N,N-di-2-ethylhexylbenzothiazolylsulfenamide, N,N-didecyl-2-benzothiazolylsulfenamide, N,N-didodecyl-2-benzothiazolylsulfenamide, and N,N-distearyl-2-benzothiazolylsulfenamide.

Only one of the another sulfenamide-based vulcanization accelerator may be used, or two or more thereof may be used.

Among these, N-cyclohexyl-2-benzothiazolylsulfenamide is preferably used from a viewpoint of reactivity.

From the viewpoints of further improving the heat-resistant adhesion between the vulcanized rubber and the metal and further improving the durability of the rubber-metal composite, the tire, the industrial belt, and the crawler, a content of the vulcanization accelerator (excluding N,N-dicyclohexyl-2-benzothiazolylsulfenamide) in the rubber composition is preferably 0.1 to 5 parts by mass, more preferably 0.3 to 4 parts by mass, and still more preferably 0.5 to 3 parts by mass per 100 parts by mass of the rubber component.

### [Filler]

The rubber composition according to the present invention preferably contains a filler containing at least one type of carbon black.

When the rubber composition contains the filler containing at least one type of carbon black, a reinforcing property of the vulcanized rubber obtained from the rubber composition according to the present invention can be improved, and the durability of the rubber-metal composite, the tire, the industrial belt, and the crawler can be improved.

The carbon black is not particularly limited and can be appropriately selected according to a purpose. The carbon black is, for example, preferably of FEF, SRF, HAF, ISAF, or SAF grade, more preferably of HAF, ISAF, or SAF grade, and still more preferably of HAF grade.

Only one type of carbon black may be used, or two or more types of carbon blacks may be used.

A content of the carbon black in the rubber composition is preferably 1 to 80 parts by mass per 100 parts by mass of the rubber component.

When the content of the carbon black in the rubber composition is 1 part by mass or more per 100 parts by mass of the rubber component, the reinforcing property of the vulcanized rubber is excellent. When the content of the carbon black in the rubber composition is 80 parts by mass or less, hysteresis caused by friction between carbon blacks can be further reduced.

The content of the carbon black in the rubber composition is more preferably 20 parts by mass or more and still more preferably 30 parts by mass or more per 100 parts by mass of the rubber component, and is more preferably 70 parts by mass or less and still more preferably 65 parts by mass or less per 100 parts by mass of the rubber component.

The filler may contain a filler other than the carbon black. Examples of the filler include a metal oxide such as silica, alumina, titania, and zirconia, and aluminum hydroxide.

The rubber composition according to the present invention may appropriately and selectively contain, within a range not impairing the object of the present invention, the rubber component, the organic phosphoric acid compound having at least one alkyl chain, the vulcanizing agent, the sulfenamide-based vulcanization accelerator other than N,N-dicyclohexyl-2-benzothiazolylsulfenamide, a filler, and, as necessary, a compounding agent generally used in the rubber industry, such as a softener, stearic acid, an antioxidant, zinc oxide, a resin, wax, and oil.

As the resin, a thermosetting resin is particularly preferably contained.

A content of the thermosetting resin in the rubber composition according to the present invention is preferably 0.1 to 20 parts by mass, and more preferably 0.1 to 10 parts by mass per 100 parts by mass of the rubber component.

### [Preparation of Rubber Composition]

The rubber composition according to the present invention can be produced by mixing the components described above and kneading the components using a kneader such as a Banbury mixer, a roll, or an internal mixer.

Here, mixing amounts of the components are the same as the amounts described above as the contents in the rubber composition.

The kneading of the components may be performed totally in one stage or performed in two or more stages. For example, in a case of kneading in two stages, a maximum temperature in a first stage of kneading is preferably 130°C to 160°C, and a maximum temperature in a second stage is preferably 90°C to 120°C.

The rubber composition according to the present invention is preferably used as a rubber composition for coating a metal cord represented by a steel cord.

### <Rubber Composition for Tire>

A rubber composition for a tire according to the present invention contains the rubber composition according to the present invention.

The rubber composition for a tire according to the present invention is suitable for producing a tire containing the rubber-metal composite excellent in heat-resistant adhesion between the vulcanized rubber and the metal, and the rubber composition for a tire according to the present invention may be used for producing members such as a tire tread portion and a sidewall portion.

### <Vulcanized Rubber>

A vulcanized rubber according to the present invention contains the rubber composition according to the present invention.

Specifically, the vulcanized rubber is obtained by vulcanizing the rubber composition according to the present invention.

### <Rubber-metal Composite>

A rubber-metal composite according to the present invention contains the vulcanized rubber containing the rubber composition according to the present invention and a metal.

By coating the metal with the rubber composition according to the present invention and vulcanizing the rubber composition, a rubber-metal composite in which the metal is coated with a vulcanized rubber is obtained. At least a part of the metal may be coated with the rubber composition according to the present invention, and it is preferable to coat the entire surface of the metal from the viewpoint of improving the durability of the rubber-metal composite.

The metal in the rubber-metal composite is not particularly limited, and examples thereof include various metal members such as a metal cord and a metal plate.

The rubber-metal composite is suitably used as a reinforcing material for use in rubber articles particularly required to have strength, such as tires for various automobiles, conveyor belts, and hoses. In particular, the rubber-metal composite is suitably used as a reinforcing member for a belt, a carcass ply, a wire chafer, or the like of a radial tire for various automobiles.

As a method of coating the steel cord, for example, a following method can be used.

Preferably, a predetermined number of brass-plated steel cords are arranged in parallel at predetermined intervals, and the steel cords are coated with an unvulcanized rubber sheet, which is formed of the rubber composition according to the present invention and has a thickness of about 0.5 mm, from both upper and lower sides to obtain a rubber-metal composite precursor (unvulcanized steel cord topping fabric). The precursor is heated and vulcanized. The composite of the vulcanized rubber and the steel cord obtained in this manner has excellent heat-resistant adhesion.

The steel cord described above may be either a steel monofilament or a multifilament (twisted cord or aligned bundle cord), and a shape thereof is not limited. When the steel cord is a twisted cord, a twisted structure is also not particularly limited, and examples of the twisted structure include a single twist, a multiple twist, a layer twist, and a composite twist combining a multiple twist and a layer twist.

From a viewpoint of suitably ensuring adhesion to the vulcanized rubber, these steel cords preferably have surfaces subjected to a surface treatment, such as a cleaning treatment using an aqueous solution containing a transition metal compound, a plating treatment, and an adhesive agent treatment.

### (Cleaning Treatment Using Aqueous Solution Containing Transition Metal Compound)

Adhesion between the vulcanized rubber and the steel cord can be improved by cleaning the surface of the steel cord using the aqueous solution containing the transition metal compound.

A transition metal refers to a metal element from scandium (Sc) to zinc (Zn) in the fourth period, from yttrium (Y) to cadmium (Cd) in the fifth period, and from lutetium (Lu) to mercury (Hg) in the sixth period in the periodic table. The transition metal is preferably cobalt (Co) from a viewpoint of improving the adhesion.

The cobalt-containing compound contained in the aqueous solution for cleaning is preferably a compound selected from cobalt chloride, cobalt nitrate, cobalt sulfate, cobalt acetate, cobalt citrate, cobalt gluconate, and cobalt acetylacetonate. In addition, nitrate, sulfate, or acetate that contain Fe and Ag can also be used as the transition metal compound contained in the aqueous solution described above.

A pH of the aqueous solution is preferably about 5 to 8. When the pH of the aqueous solution is in this range, the adhesion between the vulcanized rubber and the metal can be improved. When the pH is in a neutral region of about 5 to 8, a load on the environment is reduced. Regarding a cleaning condition, a cleaning time may be appropriately set according to a concentration of the aqueous solution. For example, when an aqueous solution containing cobalt acetate is used, the cleaning time is preferably 1 second to 60 seconds at a concentration of 0.01 g/L to 10 g/L.

### (Plating Treatment)

A surface of a steel filament may be plated. A type of plating is not particularly limited. Examples of the type of plating include zinc (Zn) plating, copper (Cu) plating, tin (Sn) plating, brass (copper-zinc (Cu-Zn)) plating, bronze (copper-tin (Cu-Sn)) plating, and ternary plating such as copper-zinc-tin (Cu-Zn-Sn) plating and copper-zinc-cobalt (Cu-Zn-Co) plating. Among these, brass plating and copper-zinc-cobalt ternary plating are preferable.

In addition, for example, a steel filament in which N atoms on the surface are 2 atomic% or more and 60 atomic% or less and a Cu/Zn ratio on the surface is 1 or more and 4 or less can be used. Examples of a steel filament 1 include one in which a ratio of an amount of phosphorus contained in an oxide up to 5 nm of an outermost layer of the filament in a radially inward direction of the filament to a total amount excluding an amount of C is 7.0 atomic% or less.

Further, when the adhesive agent treatment is used, for example, a treatment using an adhesive agent such as trade name "Chemlok" (registered trademark) manufactured by Lord Corporation is preferable.

Among the above, the steel cord preferably has the surface subjected to the cleaning treatment using the aqueous solution containing the transition metal compound or the plating treatment, more preferably has the surface subjected to the cleaning treatment using the aqueous solution containing the cobalt-containing compound or a cobalt ternary plating treatment, and still more preferably has the surface subjected to the cleaning treatment using the aqueous solution containing the cobalt-containing compound.

### <Tire>

A tire according to the present invention contains the rubber-metal composite according to the present invention.

The tire according to the present invention contains the rubber-metal composite according to the present invention and is thus excellent in durability.

A method of producing the tire according to the present invention is not particularly limited as long as it is a method capable of producing the tire in a manner of containing the rubber-metal composite according to the present invention.

In general, a rubber composition containing various components is processed into members in an unvulcanized stage, and the members are pasted and molded on a tire molding machine by a usual method so as to mold a green tire. The green tire is heated and pressurized in a vulcanizer to produce a tire. For example, the tire is obtained by kneading the rubber composition according to the present invention, then rubberizing the steel cord using the obtained rubber composition, laminating an unvulcanized belt layer, an unvulcanized carcass, and other unvulcanized members, and vulcanizing the unvulcanized laminated body.

As a gas with which the tire is to be filled, normal air, air with an adjusted oxygen partial pressure, and an inert gas such as nitrogen, argon, or helium may be used.

### <Industrial Belt, Hose, and Crawler>

An industrial belt according to the present invention contains the rubber-metal composite according to the present invention.

A crawler according to the present invention contains the rubber-metal composite according to the present invention.

A hose according to the present invention contains the rubber-metal composite according to the present invention.

Since the industrial belt, the crawler, and the hose according to the present invention contain the rubber-metal composite according to the present invention that has excellent heat-resistant adhesion, durability thereof is excellent. Examples of the industrial belt include a conveyor belt.

A method of producing the industrial belt, the crawler, and the hose according to the present invention is not particularly limited.

### Examples

### <Examples 1 and 2 and Comparative Example 1>

### [Preparation of Rubber Composition]

Components according to mixing composition as shown in Table 1 were kneaded to prepare a rubber composition. In Table 1, a blank column portion means that a numerical value is 0. Details of the components as shown in Table 1 are as follows. In addition to the components as shown in Table 1, any of the rubber compositions also contains 2.3 parts by mass in total of other components per 100 parts by mass of the rubber component, including 0.6 parts by mass of stearic acid.
Natural rubber: RSS#3
Carbon black: trade name "SEAST 300" (HAF-LS grade) manufactured by Tokai Carbon Co., Ltd.
Antioxidant: trade name "NOCRAC 6C" manufactured by Ouchi Shinko Chemical Industrial Co., Ltd.
Organic phosphoric acid compound: an organic phosphoric acid compound having the following structure, trade name "ADK STAB AX-71" manufactured by ADEKA Corporation
Vulcanization accelerator: N-cyclohexyl-2-benzothiazolylsulfenamide

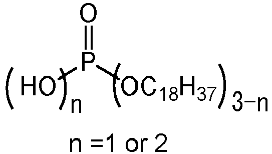

### [Surface Treatment of Steel Cord]

A steel cord (3 + 9 + 15 × 0.23 mm (wire diameter)) formed of five steel wires, which were brass-plated (thickness: 0.25 pm) with copper and zinc contents (Cu: 63% by mass, Zn: 37% by mass) in an entire brass-plated layer, was prepared. The obtained steel cord was subjected to a cleaning treatment using an aqueous solution containing cobalt acetate, and then was dried to obtain a surface-treated steel cord.

### <Preparation of Rubber-metal Composite>

Surface-treated steel cords (3 + 9 + 15 × 0.23 mm (wire diameter)) were arranged in parallel at intervals of 12.5 mm and coated with the prepared rubber composition to prepare an unvulcanized rubber-metal composite precursor (unvulcanized steel cord topping fabric) having a thickness of 7 mm. Thereafter, the rubber-metal composite precursor was quickly vulcanized by a usual method to prepare a rubber-metal composite containing the vulcanized rubber.

### [Evaluation]

Rubber-metal adhesion of the rubber-metal composite was evaluated from viewpoints of [1] initial adhesion and [2] heat-resistant adhesion.

In the evaluation of [1] initial adhesion, a steel cord was drawn at a normal temperature (25°C) from the prepared rubber-metal composite, a coating state of the vulcanized rubber attached to the steel cord was visually observed, and a coating ratio was determined to be 0 area% to 100 area%.

In the evaluation of [2] heat-resistant adhesion, the prepared rubber-metal composite was placed in a nitrogen atmosphere at 110°C under an amount of heat equivalent to that during 30 days and deteriorated. Thereafter, the steel cord was drawn from the rubber-metal composite at -60°C or lower, the coating state of the vulcanized rubber attached to the steel cord was visually observed, and the coating ratio was determined to be 0 area% to 100 area%.

In [1] initial adhesion and [2] heat-resistant adhesion, the coating ratio of the vulcanized rubber in Examples 1 and 2 was indexed while the coating ratio of the vulcanized rubber in Comparative Example 1 was set to 100.

Results are shown in Table 1.

**[Table 1]**

| | | Comparative Example 1 | Example 1 | Example 2 |
|---|---|---|---|---|
| Natural rubber | Part by mass | 100 | 100 | 100 |
| Carbon black | Part by mass | 55 | 55 | 55 |
| Zinc oxide | Part by mass | 8 | 8 | 8 |
| Antioxidant | Part by mass | 1 | 1 | 1 |
| Organic phosphoric acid compound | Part by mass | | 1 | 2 |
| Vulcanization accelerator | Part by mass | 1 | 1 | 1 |
| Sulfur | Part by mass | 7 | 7 | 7 |
| Initial adhesion | Index | 100 | 100 | 100 |
| Heat-resistant adhesion | Index | 100 | 194 | 150 |

As can be seen from Table 1, the rubber-metal composites obtained from the rubber compositions according to Examples that contain the organic phosphoric acid compound in the present invention are more excellent in heat-resistant adhesion than the rubber-metal composite according to Comparative Example.

### Industrial Applicability

The rubber composition according to the present invention can be used to produce a rubber-metal composite having excellent heat-resistant adhesion, so that the rubber-metal composite obtained using the rubber composition according to the present invention is suitable for producing various tires such as heavy-duty tires including tires for trucks and tires for buses, and tires for passenger cars, an industrial belt, a hose, and a crawler.

## Claims

1. A rubber composition comprising:
a rubber component;
an organic phosphoric acid compound having at least one alkyl chain;
a vulcanizing agent; and
a vulcanization accelerator, wherein
a content of a cobalt-containing compound is 0.00 parts by mass or more and less than 0.01 parts by mass as converted to a cobalt amount per 100 parts by mass of the rubber component, and
a content of N,N-dicyclohexyl-2-benzothiazolylsulfenamide is 0.00 parts by mass or more and less than 0.08 parts by mass per 100 parts by mass of the rubber component.

2. The rubber composition according to claim 1, wherein the alkyl chain has 1 to 20 carbon atoms.

3. The rubber composition according to claim 1 or 2, wherein the alkyl chain has 15 to 20 carbon atoms.

4. The rubber composition according to any one of claims 1 to 3, wherein a content of the organic phosphoric acid compound is 0.05 to 10 parts by mass per 100 parts by mass of the rubber component.

5. The rubber composition according to any one of claims 1 to 4, wherein the rubber component contains a rubber having an isoprene structure.

6. The rubber composition according to claim 5, wherein the rubber having an isoprene structure contains at least one selected from the group consisting of a synthetic isoprene rubber and a natural rubber.

7. The rubber composition according to claim 5 or 6, wherein the rubber component contains 50% to 100% by mass of the rubber having an isoprene structure.

8. The rubber composition according to any one of claims 1 to 7, further comprising a filler containing at least one type of carbon black.

9. The rubber composition according to claim 8, wherein a content of the carbon black is 1 to 80 parts by mass per 100 parts by mass of the rubber component.

10. A rubber composition for a tire comprising the rubber composition according to any one of claims 1 to 9.

11. A vulcanized rubber comprising the rubber composition according to any one of claims 1 to 9.

12. A rubber-metal composite comprising: the vulcanized rubber according to claim 11; and a metal.

13. A tire comprising the rubber-metal composite according to claim 12.

14. An industrial belt comprising the rubber-metal composite according to claim 12.

15. A crawler comprising the rubber-metal composite according to claim 12.

16. A hose comprising the rubber-metal composite according to claim 12.
